# EUROPÄISCHE PATENTSCHRIFT

(11) **EP 0 445 623 B1**
(45) Veröffentlichungstag und Bekanntmachung des Hinweises auf die Patenterteilung: **20.04.1994**
(21) Anmeldenummer: 91102777.9
(22) Anmeldetag: 26.02.1991
(51) Int. Cl.: F16H 7/08, A01D 34/68

(54) **Zugmittelgetriebe für ein Arbeitsgerät, insbesondere für einen an ein Fahrzeug angeschlossenen Rasenmäher**
Belt transmission for a working tool, especially for a lawnmower connected with a vehicle
Transmission à courroie pour un instrument de travail, en particulier pour une tondeuse à gazon connectée à un véhicule

(30) Priorität: 05.03.1990 US 488197
(43) Veröffentlichungstag der Anmeldung: 11.09.1991
(73) Patentinhaber: DEERE & COMPANY, Moline, Illinois 61265 (US)
(72) Erfinder: Kuhn, John Boyd, Rubicon, Wisconsin 53078 (US); Hunt, Kenneth Edward, Oconomowoc, Wisconsin 53066 (US); Thorman, Christopher Scott, Beaver Dam, Wisconsin 53916 (US)
(74) Vertreter: Feldmann, Bernhard

(56) Entgegenhaltungen:
- EP-A- 0 036 198
- EP-A- 0 135 702
- GB-A- 1 518 887
- US-A- 3 916 606
- US-A- 4 023 429
- US-A- 4 813 215
- US-A- 4 920 733

## Beschreibung

Die Erfindung bezieht sich auf ein Zugmittelgetriebe für ein Arbeitsgerät, insbesondere für einen an ein Fahrzeug angeschlossenen Rasenmäher, mit einem ersten von einer Kraftquelle angetriebenen Zugmittel zum Antrieb einer verstellbar gelagerten Zugmittelscheibe und einem zweiten mit dem ersten Zugmittel gekuppelten und unter der Wirkung einer Spannvorrichtung stehenden Zugmittel zum Antrieb von Arbeitswerkzeugen, wobei die Zugmittelscheibe über eine eine Feder aufweisende Stellvorrichtung in eine erste Stellung, in der die Zugmittelscheibe das erste Zugmittel spannt, und in eine zweite Stellung verstellbar ist, in der die Wirkung der Feder aufgehoben ist.

Dieses Zugmittelgetriebe (JOHN DEERE Operator's Manual "170, 175, 180 and 185 Lawn Tractors") dient zum Antrieb der um vertikale Achsen umlaufenden Messer eines an einen Kleinschlepper angeschlossenen Rasenmähers. Es weist zwei als endlose Riemen ausgebildete Zugmittel auf, wobei das erste Zugmittel über eine von dem Kleinschlepper aus antreibbare Riemenscheibe in Umlauf versetzt wird. Mit der verstellbar gelagerten Zugmittelscheibe ist eine weitere Zugmittelscheibe drehfest verbunden, die das zweite Zugmittel antreibt, über das die Messer in Drehung versetzt werden. Soll der Rasenmäher von dem Kleinschlepper abgebaut werden, so muß auch die Antriebsverbindung gelöst werden, wozu das erste Zugmittel von der Zugmittelscheibe abgenommen werden muß. Das zweite Zugmittel verbleibt am Rasenmäher in einem gespannten Zustand, wobei die Spannung des zweiten Zugmittels auch auf das erste Zugmittel wirkt. Das Abnehmen des ersten Zugmittels ist dadurch erschwert.

Dieses bekannte Zugmittelgetriebe ist in Fig. 5 dargestellt, und auf die zugehörige Beschreibung wird verwiesen.

Die mit der Erfindung zu lösende Aufgabe wird darin gesehen, die Antriebsverbindung leichter lösen zu können. Hierzu sieht die Erfindung vor, daß die Zugmittelscheibe über die Stellvorrichtung über die zweite Stellung hinaus in eine dritte Stellung verstellbar ist, in der das erste Zugmittel von der Zugmittelscheibe leicht entfernt werden kann.

Nach einem weiteren Vorschlag der Erfindung kann die verstellbar gelagerte Zugmittelscheibe einen ersten Schwenkhebel und die Stellvorrichtung einen zweiten Schwenkhebel aufweisen, wobei die Feder als Druckfeder ausgebildet und über eine totes Spiel aufweisende Verbindung an den ersten Schwenkhebel angeschlossen ist. Auf diese Weise ist die Feder so angeordnet, daß sie in der ersten Stellung die Zugmittelscheibe gegen das Zugmittel drückt und so die erforderliche Spannung hervorruft. Über die das tote Spiel aufweisende Verbindung läßt sich die Federwirkung wieder ausschalten.

Im einzelnen kann die Stellvorrichtung erfindungsgemäß einen Stangenteil aufweisen, auf den die Feder aufgeschoben ist, wobei die Feder gegen je einen Anschlag an dem Stangenteil und an dem ersten Schwenkhebel anliegt.

Um eine einfache Verbindung mit einem toten Spiel zu erreichen, nimmt der Anschlag an dem ersten Schwenkhebel den Stangenteil verschiebbar auf.

Zur einfachen Handhabung wird nach der Erfindung ferner vorgeschlagen, daß mit dem zweiten Schwenkhebel ein Handhebel verbunden ist, der aus einer ersten verriegelbaren Stellung, in der die Feder gespannt ist, in eine zweite Stellung verstellbar ist, in der sich die Zugmittelscheibe in ihrer dritten Stellung befindet. Dies bringt den weiteren Vorteil mit sich, daß in der verriegelten Stellung der Handhebel außerdem noch als Griff zum Hochheben des Arbeitsgerätes Verwendung finden kann, wenn dieses beispielsweise ein Hindernis auf dem Boden überwinden soll.

Vorteilhaft kann der Stangenteil derart an den zweiten Schwenkhebel angeschlossen sein, daß die Wirkungslinie der Feder in der ersten Stellung des Handhebels an der einen Seite eines den zweiten Schwenkhebel mit dem Arbeitsgerät verbindenden Schwenkzapfens und in der zweiten Stellung des Handhebels an der anderen Seite des Schwenkzapfens verläuft. Damit braucht der Handhebel in der zweiten Stellung nicht noch gesondert gesichert zu werden, da der Stangenteil über den Totpunkt hinaus verschwenkt wurde.

Dadurch, daß die Feder in der zweiten Stellung des Handhebels teilweise gespannt ist, wird nach der Erfindung außerdem erreicht, daß zum Spannen des ersten Zugmittels von der Bedienungsperson weniger Energie als bisher aufgewendet werden muß.

In der Zeichnung ist ein herkömmliches Zugmittelgetriebe und ein Ausführungsbeispiel nach der Erfindung dargestellt. Es zeigt:
- Fig. 1: einen Kleinschlepper mit angebautem Rasenmäher,
- Fig. 2: ein Zugmittelgetriebe nach der Erfindung und in einem gespannten Zustand,
- Fig. 3: eine ähnliche Darstellung wie in Fig. 2, jedoch das erste Zugmittel in einem Zustand zeigend, in dem die Antriebsverbindung gelöst werden kann,
- Fig. 4: einen Ausschnitt des Zugmittelgetriebes nach den Fig. 2 und 3 in perspektivischer Darstellung und
- Fig. 5: ein herkömmliches Zugmittelgetriebe.

In der nachfolgenden Beschreibung wird zunächst auf das herkömmliche Zugmittelgetriebe nach Fig. 5 eingegangen. Mit 10 ist dort ein Arbeitsgerät in Form eines an einen Kleinschlepper anschließbaren Arbeitsgerätes bezeichnet, das ein Messerdeck 12 mit darunter umlaufenden Messern 14 aufweist. Die drei vorgesehenen um vertikale Achsen umlaufenden Messer dienen zum Mähen einer beispielsweise in einer Parkanlage angelegten Rasenfläche.

Von dem Kleinschlepper besteht eine Antriebsverbindung zu dem Rasenmäher mit einem ersten endlosen Riemen 16, der um eine von einer Kraftquelle aus antreibbare Ausgangsscheibe 18 und um eine erste Antriebsscheibe 20 einer doppelten Schwingscheibe 22 geführt ist. Die Antriebsscheibe sitzt im einzelnen auf einer Hülse oder Welle 24 drehfest auf, die ihrerseits an einem ersten Schwenkhebel 26 angebracht ist. Letzterer ist auf dem Messerdeck 12 mittels einer Achse 24 verstellbar gelagert.

Die Messer 14 werden über einen zweiten endlosen Riemen 30 angetrieben, der um eine weitere in der Fig. 5 nicht erkennbare Riemenscheibe geführt ist, die drehfest auf der Welle 24 unterhalb der Antriebsscheibe 20 aufsitzt. Die die Messer 14 antreibenden Scheiben sind mit 34 bezeichnet.

Damit der zweite endlose Riemen 30 eine ausreichende Riemenspannung aufweist, ist eine Zugfeder 36 vorgesehen, die einenends an dem Messerdeck 12 und anderenends an einem Hebelarm 38 angreift. Dieser ist ebenfalls um die Achse 28 verstellbar, aber nicht mit dem als Winkelhebel ausgebildeten Schwenkhebel 26 verbunden. Damit können Hebelarm 38 und Schwenkhebel 26 unabhängig voneinander auf der Achse 28 verschwenken. Der Hebelarm 38 ist etwa T-förmig ausgebildet und nimmt an einem seiner Enden noch über eine Welle 40 eine Spannscheibe 42 drehbar auf, die zum Spannen des zweiten Riemens 30 dient. Die Zugfeder 36 ist dabei derart angeordnet, daß sie die Spannscheibe 42 mit Bezug auf Fig. 5 im Uhrzeigerdrehsinn verschwenken will, wodurch die Spannscheibe 42 fest gegen den zweiten Riemen 30 gedrückt wird. Hierdurch entsteht die erforderliche Riemenspannung für den zweiten endlosen Riemen 30, der damit antriebsmäßig mit den Scheiben 34, der Spannscheibe 42 und der auf der Welle 24 vorgesehenen und nicht dargestellten Riemenscheibe gekuppelt ist.

Über eine weitere Zugfeder 44 erhält der erste Riemen 16 seine erforderliche Riemenspannung. Hierzu ist die Zugfeder 44 zwischen dem einen Schenkel des Schwenkhebels 26 und einem von Hand verschwenkbaren Spannhebel 46 vorgesehen, der seinerseits ebenfalls auf dem Messerdeck 12 angeordnet ist. Bei sich in einer seiner Endstellungen befindlichem Spannhebel 46 ist die Zugfeder 44 gespannt und bestrebt, den Schwenkhebel 26 entgegen dem Uhrzeigerdrehsinn auf der Achse 28 zu verstellen, wodurch die Antriebsscheibe 20 entgegen dem Uhrzeigerdrehsinn und nach rückwärts gegen den ersten Riemen 16 gedrückt wird. Hierdurch entsteht die erforderliche Riemenspannung, und der erste Riemen 16 ist in dieser Stellung des Spannhebels 46 antriebsmäßig mit der Ausgangsscheibe 18 und der Antriebsscheibe 20 gekuppelt. Wird der Spannhebel 46 entriegelt, so entspannt auch die Zugfeder 44, und die Antriebsscheibe 20 wird nicht mehr über die Zugfeder 44 gegen den ersten Riemen 16 gedrückt. Wegen der Verknüpfung des ersten und des zweiten Riemens miteinander kann jedoch in diesem Zustand des ersten Riemens 16 die Zugfeder 36 auf den Riemen 16 noch eine gewisse Spannung ausüben, da beim Entriegeln des Spannhebels 46 der zweite endlose Riemen 30 gespannt bleibt. Die Riemenspannung des zweiten Riemens 30 wirkt nämlich dahingehend, daß die unterhalb der Antriebsscheibe 20 vorgesehene Riemenscheibe entgegen dem Uhrzeigerdrehsinn auf der Achse 28 verstellt wird und somit auch die ebenfalls mit der Welle 24 drehfest verbundene Antriebsscheibe 20.

Wenn die Zugfeder 36 die Spannscheibe 42 im Uhrzeigerdrehsinn verschwenkt oder verschwenken will und dabei den zweiten Riemen 30 spannt, wirken gleiche Kräfte F1 und F2 auf die Schwingscheibe 22. Diese Kräfte wirken mit Bezug auf die Achse 28 durch Arme L1 und L2, wobei L2 größer ist als L1 und das aus F1 x L1 entstehende Moment kleiner ist als das aus F2 x L2 entstehende Moment. Dementsprechend wirkt auf die Schwingscheibe 22 eine entgegen dem Uhrzeigerdrehsinn gerichtete Kraft, so daß in dem ersten Riemen 16 noch eine gewisse Restspannung aufrechterhalten wird, wenn die Zugfeder 46 entspannt ist. Für eine Bedienungsperson ist es damit nicht ganz einfach, zum Abbauen des Gerätes oder zum Auswechseln eines oder beider Riemen den ersten Riemen 16 von der Ausgangsscheibe 18 oder der Antriebsscheibe 20 zu entfernen.

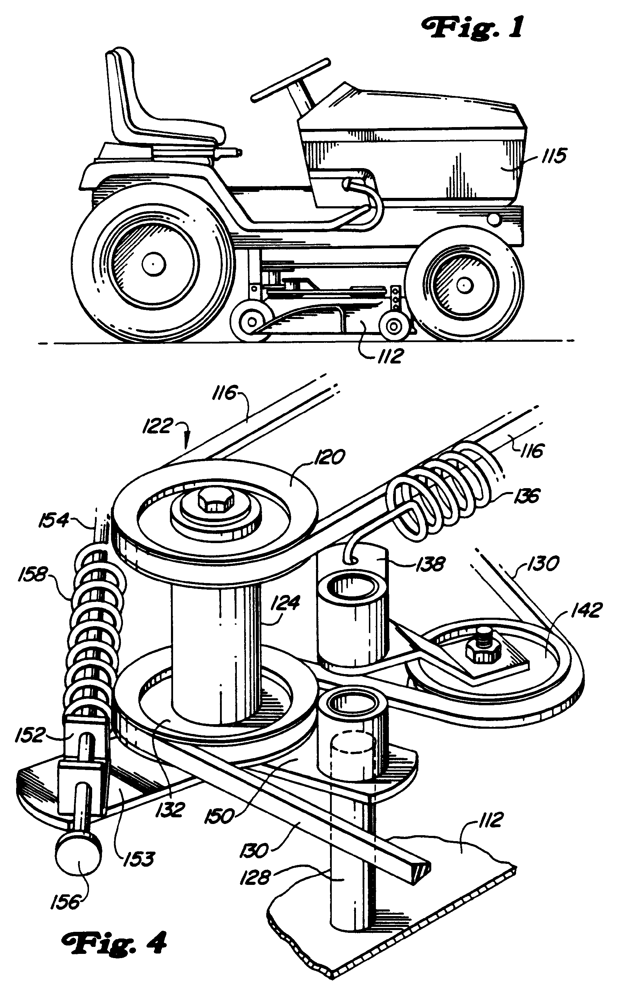

Die Erfindung schafft hier Abhilfe, wie nachfolgend unter Bezugnahme auf die Fig. 1 bis 4 ausgeführt wird.

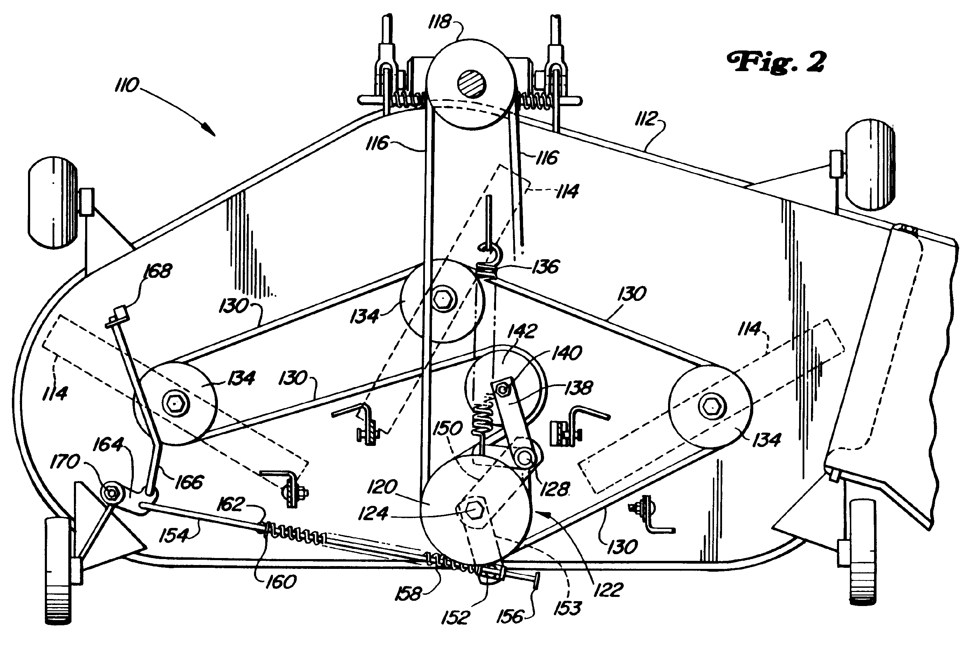

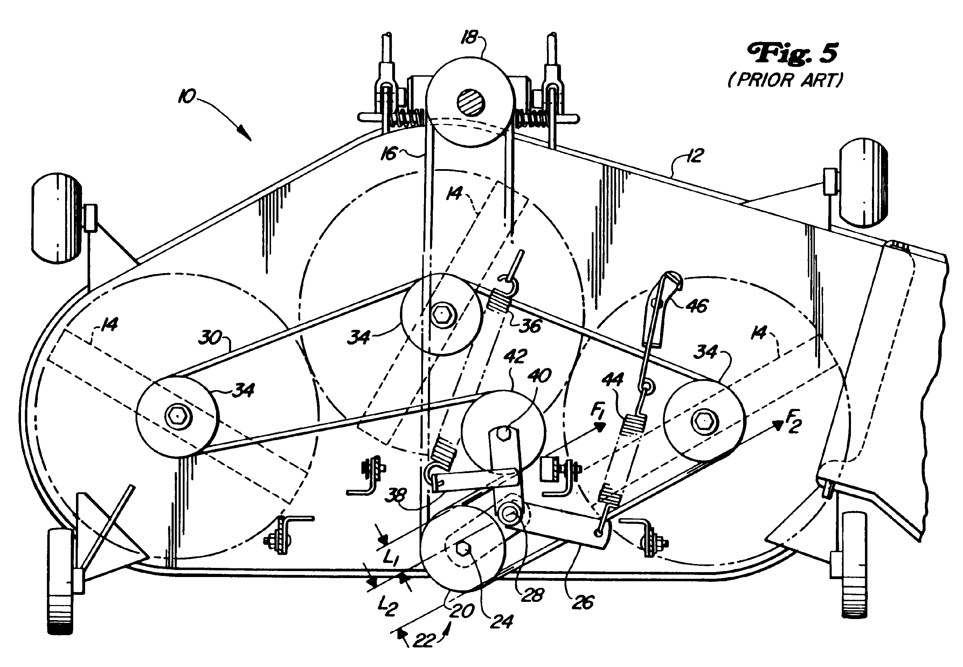

Ein Arbeitsgerät 110 in Form eines Rasenmähers ist unter einem Fahrzeug 115, wie einem Kleinschlepper, angeordnet. Unter einem Messerdeck 112 rotieren bei eingelegtem Antrieb Arbeitswerkzeuge 114, beispielsweise Messer, um vertikale Achsen. Das Zugmittelgetriebe ist im einzelnen in den Fig. 2 bis 4 erkennbar, und der Antrieb wird durch eine vom Fahrzeug aus antreibbare Ausgangsscheibe 118 eingeleitet. Über ein erstes in der Zeichnung als Riemen dargestelltes endloses Zugmittel 116 wird der Antrieb auf eine Zugmittelscheibe 120 übertragen, die, wie am besten aus der Fig. 4 zu erkennen ist, Teil einer doppelscheibigen Schwingscheibe 122 ist. Dabei ist die Zugmittelscheibe 120 drehfest mit einer Hohlwelle 124 verbunden, die über einen Arm 150 um eine Achse 128 verstellbar angeordnet ist. Die Achse 128 ist mit dem Messerdeck 112 verbunden.

Das erste Zugmittel 116 ist lediglich um die Ausgangsscheibe 118 und die Zugmittelscheibe 120 geführt, wobei ein zweites Zugmittel 130 - ebenfalls in Form eines endlosen Riemens - zum Antrieb der Arbeitswerkzeuge 114 dient. Hierzu ist eine zweite Zugmittelscheibe 132 auf der Hohlwelle 124 drehfest angeordnet, die damit das zweite Zugmittel 130 antreiben kann, das wiederum mit den Arbeitswerkzeugen 114 verbundene Scheiben 134 umschlingt.

Zum Spannen des zweiten Zugmittels 130 dient eine Zugfeder 136, die einenends an dem Messerdeck 112 und anderenends an einem winklig ausgebildeten Hebelarm 138 angreift, der auf der Achse 128 verschwenkbar aufsitzt und eine Spannscheibe 142 über eine Welle 140 drehbar aufnimmt. Die Zugfeder 136 ist dabei derart angeordnet, daß sie bestrebt ist, die Spannscheibe 142 im Uhrzeigerdrehsinn zu verschwenken, und zwar gegen das zweite Zugmittel 130. Hierdurch erhält das zweite Zugmittel eine ausreichende Riemenspannung, und das zweite Zugmittel 130 ist stets antriebsmäßig mit den Scheiben 134 der Arbeitswerkzeuge 114 verbunden.

Auch das erste Zugmittel 116 ist spann- und entspannbar, wozu eine Stellvorrichtung vorgesehen ist. Hierzu gehört ein U-förmig als Anschlag 152 dienender Teil, der auf einem ersten mit dem Arm 150 fest verbundenen Schwenkhebel 153 angebracht ist. Der Schwenkhebel verschwenkt damit ebenfalls um die Achse 128. In in den Schenkeln des U-förmigen Teils vorgesehenen Bohrungen ist ein Stangenteil 154 verschiebbar geführt, der endseitig eine über einen Stift gesicherte Scheibe 156 aufweist. Hierdurch ist eine ein totes Spiel aufweisende Verbindung geschaffen, die mit einer Druckfeder 158 zusammenwirkt, die auf dem Stangenteil 154 zwischen dem Anschlag 152 an dem Schwenkhebel 153 und einem als Scheibe ausgebildeten Anschlag 160 am Stangenteil aufsitzt. Die Scheibe kann dabei gegen einen abgesetzten Teil 162 am Stangenteil 154 anliegen. Der Stangenteil 154 ist anderenends an einen zweiten Schwenkhebel 164 angeschlossen, der um einen auf dem Messerdeck 112 vorgesehenen Zapfen 170 verschwenkbar ist. Ein Handhebel 166 ist fest mit dem zweiten Schwenkhebel 166 verbunden und in einen Hakenteil 168 einrastbar, der ortsfest auf dem Messerdeck 112 angebracht ist. Hierdurch ist eine Endstellung des Handhebels 166 markiert, und zwar die am weitesten im Uhrzeigerdrehsinn verschwenkte Stellung.

Während des Betriebes des Arbeitsgerätes müssen beide Zugmittel 116 und 130 gespannt sein. Das Zugmittel 130 ist an sich immer in einem gespannten Zustand, und damit das Zugmittel 116 die erforderliche Riemenspannung aufweist, muß sich der Handhebel 166 in seiner in Fig. 2 wiedergegebenen Stellung befinden, in der er durch den Hakenteil 168 gehalten ist. In der in Fig. 2 dargestellten Stellung des Handhebels 166 ist der Stangenteil 154 am weitesten nach rechts verschoben, und der Anschlag 160 am Stangenteil 154 ist bestrebt, die Zugfeder 158, die anderenends gegen den Anschlag 152 am Schwenkhebel 153 anliegt, zusammenzudrücken. Der Druck der Feder 158 übt auf den Schwenkhebel 153 eine Kraft aus, die den Schwenkhebel 153 weiter entgegen dem Uhrzeigerdrehsinn verschwenken will, wodurch die nach rückwärts verschwenkte Zugmittelscheibe 120 gegen das erste Zugmittel 116 gedrückt wird.

Während des Arbeitseinsatzes kann die Gefahr bestehen, daß das Arbeitsgerät auf Bodenhindernisse stößt. In einem solchen Fall kann die Bedienungsperson das Messerdeck 112 kurz anheben, um das Hindernis zu überwinden. Im vorliegenden Fall braucht die Bedienungsperson nur den eingerasteten Handhebel 166 zu erfassen, um ein Anheben zumindest der einen Seite zu ermöglichen. Zusätzliche Handgriffe brauchen damit nicht auf das Messerdeck 112 aufgeschweißt zu werden.

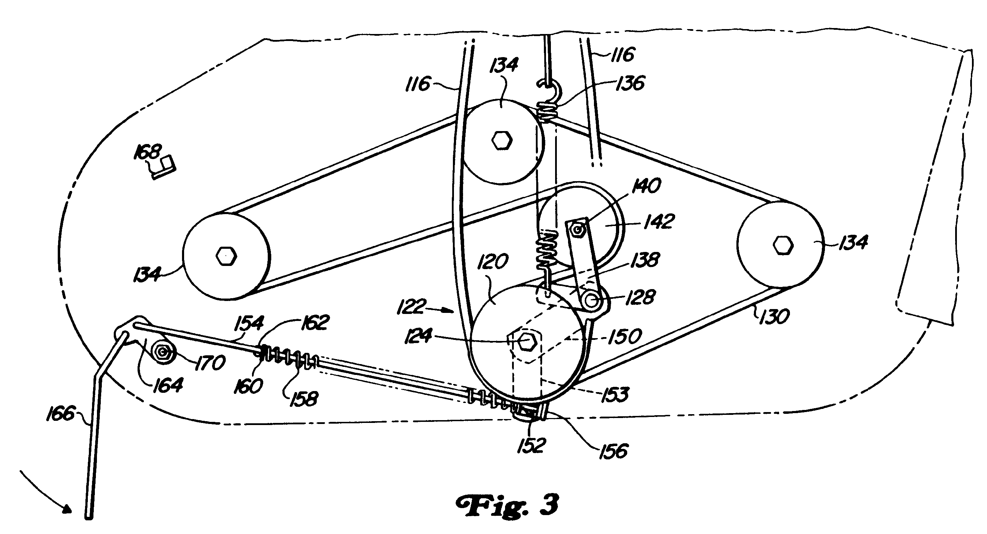

Zum Abbauen des Arbeitsgerätes oder zum Auswechseln des oder der Zugmittel muß der Antrieb gelöst werden. Hierzu muß das Zugmittel 116 von der Ausgangsscheibe 118 oder der Zugmittelscheibe 120 entfernt werden. Um dies ausführen zu können, wird das erste Zugmittel 116 zunächst entspannt, wozu die Bedienungsperson den Handhebel 166 als erstes entriegelt, indem sie den Handhebel 166 aus dem Hakenteil 168 ausrückt. Hierbei verstellt sich die Stellvorrichtung aus ihrer ersten Stellung in ihre zweite Stellung, und die Spannung in dem ersten Zugmittel 116 verstellt die Zugmittelscheibe 120 nach vorwärts. Der Schwenkhebel 153 und der Arm 150 schwenken im Uhrzeigerdrehsinn und schieben die Druckfeder 158 über den Anschlag 152 mit Bezug auf die Fig. 2 nach links. Der Stangenteil 154 wird dabei ebenfalls nach links verschoben und der zweite Schwenkhebel 164 mit dem Handhebel 166 in eine Zwischenstellung entgegen dem Uhrzeigerdrehsinn verstellt. Andererseits wirkt sich die Riemenspannung in dem zweiten Zugmittel 130 dahingehend aus, daß die Riemenscheibe 132 an der Schwingscheibe 122 dazu tendiert, entgegen dem Uhrzeigerdrehsinn um die Achse 128 zu verschwenken. Infolge der geometrischen Anordnung der Achse 128, der Zugmittelscheibe 120 und der durch das zweite Zugmittel 130 auf diese einwirkenden Kräfte wird die Schwingscheibe 122 in einer entgegen dem Uhrzeigerdrehsinn verlaufenden Drehrichtung und wieder nach unten gedrückt, so daß das erste Zugmittel 116 nicht vollständig von der Zugmittelscheibe 120 loskommt. Damit verbleibt in dem ersten Zugmittel 116 noch eine Restspannung, auch dann, wenn der Handhebel 166 entriegelt wurde. Diese Restspannung in dem Zugmittel 116 wird dadurch behoben, daß die Bedienungsperson den Handhebel 166 weiter entgegen dem Uhrzeigerdrehsinn verschwenkt, bis er etwa die in Fig. 3 eingezeichnete Stellung erreicht bzw. diese überschreitet. Die Stellvorrichtung gelangt dabei in ihre dritte Stellung. Beim Verschwenken des Handhebels 166 entgegen dem Uhrzeigerdrehsinn wird der Stangenteil weiter nach links verschoben und sein Anschlußende an den zweiten Schwenkhebel derart verschwenkt, daß es unterhalb des Schwenkzapfens 170 zu liegen kommt. Bei diesem Vorgang kommt die an dem anderen Ende des Stangenteils 154 angebrachte Scheibe 156 gegen den U-förmig ausgebildeten Teil mit dem Anschlag 152 zur Anlage, und der Schwenkhebel 153 und der Arm 150 werden im Uhrzeigerdrehsinn verstellt und die Zugmittelscheibe 120 nach vorne in eine dritte Stellung, in der das erste Zugmittel 116 vollständig entspannt bzw. lose ist und leicht von der Zugmittelscheibe 120 oder Ausgangsscheibe 118 entfernt werden kann.

Befindet sich der Handhebel 166 in seiner extremen entgegen dem Uhrzeigerdrehsinn verstellten Stellung, dann nimmt der Stangenteil 154 eine Totpunkt- oder Übertotpunktlage ein, so daß der Handhebel in dieser Stellung verbleibt, ohne arretiert werden zu müssen. Beim Entfernen des Zugmittels braucht damit der Handhebel 166 nicht unbedingt von Hand festgehalten zu werden. Das Abnehmen des Zugmittels ist damit noch einfacher.

Will andererseits die Bedienungsperson das erste Zugmittel 116 wieder spannen, so verschwenkt sie den Handhebel 166 im Uhrzeigerdrehsinn und verriegelt ihn schließlich mit dem Hakenteil 168. Die Druckfeder kann dabei so angeordnet sein, daß sie bereits zu Beginn des Schwenkvorgangs im Uhrzeigerdrehsinn etwas gespannt ist zwischen den Anschlägen 152 und 160. Die Druckfeder 158 ist damit vorgespannt, was das Zurückschwenken des Handhebels 166 bzw. Spannen des ersten Zugmittels 116 ohne allzu großen Kraftaufwand ermöglicht. In jedem Fall muß bei dem Zurückschwenken im Uhrzeigerdrehsinn nicht die gesamte Federkraft überwunden werden.

Bei dem vorbeschriebenen Zugmittelgetriebe ist von zwei Zugmitteln ausgegangen worden. Jedoch kann die vorliegende Erfindung auch bei einem Getriebe mit nur einem Zugmittel eingesetzt werden.

## Patentansprüche

1. Zugmittelgetriebe für ein Arbeitsgerät, insbesondere für einen an ein Fahrzeug (115) angeschlossenen Rasenmäher, mit einem ersten von einer Kraftquelle angetriebenen Zugmittel (116) zum Antrieb einer verstellbar gelagerten Zugmittelscheibe (120) und einem zweiten mit dem ersten Zugmittel (116) gekuppelten und unter der Wirkung einer Spannvorrichtung stehenden Zugmittel (130) zum Antrieb von Arbeitswerkzeugen (114), wobei die Zugmittelscheibe (120) über eine eine Feder (158) aufweisende Stellvorrichtung in eine erste Stellung, in der die Zugmittelscheibe (120) das erste Zugmittel (130) spannt, und in eine zweite Stellung verstellbar ist, in der die Wirkung der Feder (158) aufgehoben ist, dadurch gekennzeichnet, daß die Zugmittelscheibe (120) über die Stellvorrichtung über die zweite Stellung hinaus in eine dritte Stellung verstellbar ist.

2. Zugmittelgetriebe nach Anspruch 1, dadurch gekennzeichnet, daß die verstellbar gelagerte Zugmittelscheibe (120) einen ersten Schwenkhebel (153) und die Stellvorrichtung einen zweiten Schwenkhebel (164) aufweist, wobei die Feder (158) als Druckfeder ausgebildet und über eine totes Spiel aufweisende Verbindung an den ersten Schwenkhebel (153) angeschlossen ist.

3. Zugmittelgetriebe nach Anspruch 1 und 2, dadurch gekennzeichnet, daß die Stellvorrichtung einen Stangenteil (154) aufweist, auf den die Feder (158) aufgeschoben ist, wobei die Feder (158) gegen je einen Anschlag (160, 152) an dem Stangenteil (154) und an dem ersten Schwenkhebel (153) anliegt.

4. Zugmittelgetriebe nach Anspruch 3, dadurch gekennzeichnet, daß der Anschlag (152) an dem ersten Schwenkhebel (153) den Stangenteil (154) verschiebbar aufnimmt.

5. Zugmittelgetriebe nach einem oder mehreren der vorherigen Ansprüche, dadurch gekennzeichnet, daß mit dem zweiten Schwenkhebel (164) ein Handhebel (166) verbunden ist, der aus einer ersten verriegelbaren Stellung, in der die Feder (158) gespannt ist, in eine zweite Stellung verstellbar ist, in der sich die Zugmittelscheibe (120) in ihrer dritten Stellung befindet.

6. Zugmittelgetriebe nach Anspruch 5, dadurch gekennzeichnet, daß der Stangenteil (154) derart an den zweiten Schwenkhebel (164) angeschlossen ist, daß die Wirkungslinie der Feder (158) in der ersten Stellung des Handhebels (166) an der einen Seite eines den zweiten Schwenkhebel (164) mit dem Arbeitsgerät verbindenden Schwenkzapfens (170) und in der zweiten Stellung des Handhebels (166) an der anderen Seite des Schwenkzapfens (170) verläuft.

7. Zugmittelgetriebe nach einem oder mehreren der vorherigen Ansprüche, dadurch gekennzeichnet, daß die Feder (158) in der zweiten Stellung des Handhebels (166) teilweise gespannt ist.

## Claims

1. Endless element drive for an implement, in particular for a lawn mower connected to a vehicle (115), with a first endless element (116) driven by a power source for driving an adjustably mounted pulley (120), and second endless element (130) coupled to the first endless element (116) and subject to the action of a tensioning device, for driving tools (114), wherein the pulley (120) can be adjusted by an adjusting device comprising a spring (158) into a first position in which the pulley (120) tensions the first endless element (130), and into a second position in which the action of the spring (158) is eliminated, characterised in that the pulley (120) can be adjusted by the adjusting device beyond the second position into a third position.

2. Endless element drive according to claim 1, characterised in that the adjustably mounted pulley (120) comprises a first pivot lever (153) and the adjusting device comprises a second pivot lever (164), wherein the spring (158) is constructed as a compression spring and connected to the first pivot lever (153) by a link displaying lost motion.

3. Endless element drive according to claims 1 and 2, characterised in that the adjusting device comprises a rod portion (154) over which the spring (158) is fitted, wherein the spring (158) abuts against a stop (160, 152) on each of the rod portion (154) and the first pivot lever (153).

4. Endless element drive according to claim 3, characterised in that the stop (152) on the first pivot lever (153) slidably receives the rod portion (154).

5. Endless element drive according to one or more of the preceding claims, characterised in that connected to the second pivot lever (164) is a hand lever (166) which can be adjusted from a first lockable position in which the spring (158) is tensioned, into a second position in which the pulley (120) is in its third position.

6. Endless element drive according to claim 5, characterised in that the rod portion (154) is connected to the second pivot lever (164) in such a way that the line of application of the spring (158) in the first position of the hand lever (166) extends on one side of a pivot pin (170) connecting the second pivot lever (164) to the implement, and in the second position of the hand lever (166) extends on the other side of the pivot pin (170).

7. Endless element drive according to one or more of the preceding claims, characterised in that the spring (158) is partially tensioned in the second position of the hand lever (166).

## Revendications

1. Transmission à moyen de traction pour un équipement de travail, en particulier pour une tondeuse à gazon raccordée à un véhicule (115), avec un premier moyen de traction (116) entraîné par une source d'énergie et destiné à entraîner une poulie de moyen de traction (120) montée à déplacement, et avec un second moyen de traction (130), accouplé au premier moyen de traction (116), soumis à l'action d'un mécanisme tendeur et destiné à entraîné des outils de travail (114), la poulie de moyen de traction (120) pouvant, au moyen d'un mécanisme de manoeuvre comprenant un ressort (158), être déplacée dans une première position, dans laquelle la poulie de moyen de traction (120) tend le premier moyen de traction (116), et dans une deuxième position, dans laquelle l'action du ressort (158) est supprimée, **caractérisée** en ce que la poulie de moyen de traction (120) peut être déplacée au moyen du mécanisme de manoeuvre, au-delà de la deuxième position, dans une troisième position.

2. Transmission à moyen de traction selon la revendication 1, **caractérisée** en ce que la poulie de moyen de traction (120) montée à déplacement présente un premier levier pivotant (153) et le mécanisme de manoeuvre présente un second levier pivotant (164), le ressort (158) étant conçu comme ressort de pression et raccordé au premier levier pivotant (153) par l'intermédiaire d'une liaison présentant une course morte.

3. Transmission à moyen de traction selon la revendication 1 ou 2, **caractérisée** en ce que le mécanisme de manoeuvre comprend une tringle (154) sur laquelle est enfilé le ressort (158), le ressort (158) s'appuyant contre des butées respectives (160, 152) prévues sur la tringle (154) et sur le premier levier pivotant (153).

4. Transmission à moyen de traction selon la revendication 3, **caractérisée** en ce que la butée (152) prévue sur le premier levier pivotant (153) reçoit à coulissement la tringle (154).

5. Transmission à moyen de traction selon l'une quelconque des revendications précédentes, **caractérisée** en ce qu'un levier à main (166) est relié au second levier pivotant (164) et peut être déplacé d'une première position verrouillable, dans laquelle le ressort (158) est tendu, dans une seconde position dans laquelle la poulie de moyen de traction (120) se trouve dans sa troisième position.

6. Transmission à moyen de traction selon la revendication 5, **caractérisée** en ce que la tringle (154) est raccordée au second levier pivotant (164) de telle sorte que la ligne d'action du ressort (158) s'étend d'un côté d'un pivot (170), reliant le second levier pivotant (164) à l'équipement de travail, dans la première position du levier à main (166), et de l'autre côté du pivot (170) dans la seconde position du levier à main (166).

7. Transmission à moyen de traction selon l'une quelconque des revendications précédentes, **caractérisée** en ce que le ressort (158) est partiellement tendu dans la seconde position du levier à main (166).
